# EUROPEAN PATENT APPLICATION

(11) **EP 1 643 502 A2**
(43) Date of publication of application: **05.04.2006**
(21) Application number: 05108597.5
(22) Date of filing: 19.09.2005
(51) Int. Cl.: G11B 20/00, G06F 21/00

(54) **Content management method and recording medium**

(30) Priority: 30.09.2004 JP 2004288469
(71) Applicant: KABUSHIKI KAISHA TOSHIBA, Tokyo 105-8001 (JP)
(72) Inventor: Kojima, Tadashi Toshiba Corporation, Minato-ku Tokyo 105-8001 (JP)
(74) Representative: Henkel, Feiler & Hänzel

(57) **Abstract**

Content data is moved from a first recording medium to a second recording medium, the first recording medium recording an encrypted content (Enc-content) (key is first key (Kt)), a first encrypted key (E-Kt) (key is a fourth key (Kmum) which is generated from a second key (Kmv) and a third key (Kmu)), and a second encrypted key (E-Kmv) (key is the third key (Kmu)). The method comprises decrypting the encrypted content (Enc-content) and the second encrypted key (E-Kmv) which are read from the first recording medium to obtain the plain content and the second key; transmitting the plain content and the second key to the second recording medium; and deleting the second encrypted key (E-Kmv) from the first recording medium.

## Description

The present invention relates to a content management method for managing content data and a recording medium.

Digital recording media for recording digitized information (text, audio, video, program, etc.) known so far include compact disc (CD) and digital versatile disc (DVD).

In such digital recording media, since digital data is recorded, recorded data can be easily copied into other digital recording media without loss in audio or video quality. Such feature involves a contradictory problem, that is, copies can be produced massively, and copied discs may be distributed illegally, and copyrights may be violated.

It has been hence attempted to prevent illegal copies by encrypting a copyright content (digitized information) by using a key, encrypting a content encryption key by using another key to conceal the encryption key, and recording the encrypted encryption key together with the encrypted content in a recording medium. More recently, however, illegal users are trying to copy all data together in another digital recording medium, including the encrypted content and the encrypted encryption key, from the digital recording medium.

In addition, as represented by digital television broadcast, there is another copyright management method allowing to store a content only in one recording medium (copy-once). This method permits the content to be stored only in one recording medium, and hence in the preliminary condition of deleting the content or inhibiting reproduction of the content in the original recording medium, this method permits move of content, that is, the content in the original recording medium is permitted to be copied in other recording media. In this case, since it takes long time to delete the content in the original recording medium, by deleting the encryption key, decryption of content is disabled and thus reproduction of content is disabled, and hence it is supposed to be deleted substantially.

In this method, however, since the encrypted content still remain in the recording medium, if the deleted encryption key is recovered by some method or other, it is possible to decrypt and reproduce the encrypted content. As a result, reproducible content are present at plural media, including the content moved to other recording media. It is hence important how to prevent recovery of an encryption key by such illegal copy of all data (batch copying).

Copyright protection methods allowing moving a content include document 1 (Jpn. Pat. Appln. KOKAI Publication No. 2003-132625), document 2 (Jpn. Pat. Appln. KOKAI Publication No. 2003-109302), and document 3 (Jpn. Pat. Appln. KOKAI Publication No. 2003-122637). These publications teach, as content illegal copy prevention technology, an encryption key revoke system in the event of illegal copy, or methods of having a medium binding function so that illegal copy may not be made on other digital recording media. For example, a content encryption key is encrypted by another key, and is recorded in the same recording medium together with an encrypted content, but after moving the content between recording media by an authorized method, and the encrypted encryption key deleted from the original recording medium is prevented from being recovered by illegal copy.

These published technologies are methods of introducing a secret information recording and reproducing system to be conducted in a drive for recording and reproducing data in a recording medium in order to prevent batch copying, and building a structure not allowing the secret information to be seen from outside of the drive. Since the secret information is composed as part of an encryption key incorporated in the encryption key management system, even if all data output from the drive is copied in batch, the encrypted content cannot be decrypted.

These published technologies are, however, not applicable in a conventional DVD drive not having secret information recording and reproducing function, and a technology applicable in a conventional DVD drive is disclosed in document 4 (Jpn. Pat. Appln. KOKAI Publication No. 2004-186825). Herein, only when downloading a digital content for the first time, as an encryption key for encrypting the content, two types are generated and recorded, that is, "an encrypted encryption key file" encrypted by a method employed in the conventional DVD recording drive (CPRM: content protection for recordable medium), and "a multiple encrypted encryption key file" which is obtained by encrypting the encrypted encryption key file with an encryption key which is secret information in the secret information recording and reproducing method, and when moving the content from the first downloaded recording medium to other recording media, only the encrypted content and multiple encrypted encryption key file are recorded in the other recording media, and thus the copyright management method allowing to move only the drive capable of recording and reproducing secret information is disclosed.

According to such system, the first recording medium in which the downloaded content is recorded can be reproduced by a CPRM drive. Further, if moving is not particularly required, it is sufficient to record an encrypted content applicable to CPRM and an encrypted encryption key at the time of the first download. As a result, if the function is limited, recording or reproducing is enabled even in a drive not having a new secret information recording and reproducing function.

It is an advantage of this method that the first recording medium can be always reproduced even if the content is moved to other recording media by move process, and that re-encode move is enabled safely because the original content is recorded in the first recording medium even if the quality is degraded as a result of change in compression ratio by re-encode move.

However, copy-once is the principle in digital TV broadcast, and since the contents are present in two locations in this method, it cannot be applied in digital TV broadcast, and technology applicable in such a case has been desired.

In the conventional copyright protection system, contents are encrypted, and an encryption key used in this encrypting is also encrypted, and recorded in the same recording medium. In this case, to prevent illegal copy, in an encrypting management system, revoke function of part of the encryption keys, or a medium binding function is built up, and the protection performance is enhanced. In this system, when a content is moved between recording media, by deleting only the encryption key from the original recording medium after moving the content, it is assumed to be the same as deletion of content.

However, in a removable and open recording medium such as an optical disc, by reading out the data in the area recording the encryption key and storing the read data in a storage unit, after a legal move process of a content, there is a possibility of illegal copy of restoring the encryption key once deleted from the original medium from the data in the encryption key recording area stored in the storage unit.

In the copyright protection system (CPRM) of the present DVD recorder, it is possible to first record a content in the HDD (hard disk drive), and move the content from the HDD to a DVD. However, the content once recorded in the DVD is not allowed to be moved to other DVDs or move into the HDD again. The reason is as follows after moving the content to a new recording medium from an original medium, it may be possible to recover the original recording medium from which the encryption key is deleted by a move process, based on the encrypted encryption key data saved in advance. In such a method, even if an encrypting device may be advanced, only by copying a part of the encrypted data as it is, an illegal copy is substantially manufactured.

The present invention is directed to a content management method and a recording medium that substantially obviate one or more of the problems due to limitations and disadvantages of the related art.

According to the present invention, it is possible to move a content between removable medium such as DVD and DVD, or from a removal medium such as DVD to a fixed medium such as HDD.

According to an embodiment of the present invention, a content management method for moving content data from a first recording medium to a second recording medium, in which the first recording medium records:
an encrypted content (Enc-content) which is obtained by encrypting a plain content with a first key (Kt),
a first encrypted key (E-Kt) which is obtained by encrypting a first key with a fourth key (Kmum) which is generated from a second key (Kmv) and a third key (Kmu), and
a second encrypted key (E-Kmv) which is obtained by encrypting the second key (Kmv) with the third key (Kmu), the method comprises:
decrypting the encrypted content (Enc-content) and the second encrypted key (E-Kmv) which are read from the first recording medium to obtain the plain content and the second key;
transmitting the plain content and the second key to the second recording medium; and
deleting the second encrypted key (E-Kmv) from the first recording medium,
whereby keeping the encrypted content (Enc-content) and the first encrypted key (E-Kt) being recorded in the first recording medium but disabling the encrypted content (Enc-content) being decrypted.

According to another embodiment of the present invention, a content management method for moving content data from a first recording medium to a second recording medium, in which the first recording medium records:
an encrypted content (Enc-content) which is obtained by encrypting a plain content with a first key (Kt),
a first encrypted key (EE-Kt) which is obtained by encrypting a first key with a fourth key (Kmum) and a fifth key (UDm), the fourth key (Kmum) generated from a second key (Kmv) and a third key (Kmu),
a second encrypted key (E-Kmv) which is obtained by encrypting the second key (Kmv) with the third key (Kmu), and
a fifth encrypted key (E-UDm) which is obtained by encrypting the fifth key (UDm) with a predetermined key,
the method comprises:
reading the first encrypted key (EE-Kt), the second encrypted key (K-Kmv), and the fifth encrypted key (E-UDm) from the first recording medium;
decrypting the second encrypted key (E-Kmv) with the third key (Kmu) to obtain the second key (Kmv);
decrypting the fifth encrypted key (E-UDm) with the predetermined key to obtain the fifth key (UDm);
decrypting the first encrypted key (EE-Kt) with the fourth key (Kmum) and the fifth key (UDm), the fourth key (Kmum) generated from the second key (Kmv) and the third key (Kmu) to obtain the first key (Kt);
decrypting the encrypted content (Enc-content) with the first key (Kt) to obtain the plain content;
transmitting the plain content and the second key to the second recording medium;
deleting the second encrypted key (E-Kmv) from the first recording medium;
updating the fifth key (UDm);
encrypting the first key (E-Kt) which is encrypted with the fourth key (Kmum) with the updated fifth key (UDm) to update the first key (E-Kt);
encrypting the updated fifth key (Um) with the predetermined key to change the updated fifth key,
whereby keeping the encrypted content (Enc-content) and the first encrypted key (E-Kt) being recorded in the first recording medium but disabling the encrypted content (Enc-content) being decrypted.

According to another embodiment of the present invention, a recording medium records an encrypted content (Enc-content) which is obtained by encrypting a plain content with a first key (Kt), a first encrypted key (E-Kt) which is obtained by encrypting a first key with a fourth key (Kmum) which is generated from a second key (Kmv) and a third key (Kmu), and a second encrypted key (E-Kmv) which is obtained by encrypting the second key (Kmv) with the third key (Kmu).

According to another embodiment of the present invention, a recording medium records an encrypted content (Enc-content) which is obtained by encrypting a plain content with a first key (Kt), a first encrypted key (EE-Kt) which is obtained by encrypting a first key with a fourth key (Kmum) and a fifth key (UDm), the fourth key (Kmum) generated from a second key (Kmv) and a third key (Kmu), a second encrypted key (E-Kmv) which is obtained by encrypting the second key (Kmv) with the third key (Kmu), and a fifth encrypted key (E-UDm) which is obtained by encrypting the fifth key (UDm) with a predetermined key.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a processing system diagram showing a basic configuration of a copyright protection system by CPRM method;
FIG. 2 is a diagram showing state transition of a recording medium when moving content;
FIG. 3 is a processing system diagram showing a copyright protection method capable of moving by using secret information recording and reproducing technology;
FIG. 4 is a system diagram showing a configuration of a move process of content after re-encode process by changing (lowering) the resolution, by using the system shown in FIG. 3;
FIG. 5 is a diagram showing state transition of a recording medium in a content move process shown in FIG. 4;
FIG. 6 is an encrypting management system diagram enabling a re-encode move process according to a first embodiment of the invention;
FIG. 7 is a diagram of configurations of "title key file" composed of plural multiple encrypted title keys and "move-key file" composed of plural encrypted move-keys used in the system in FIG. 6;
FIG. 8 is a diagram of state transition of each recording medium when the content is moved between plural recording media;
FIG. 9 is a detailed drawing of the encrypting management system (FIG. 6), enabling a re-encode move process according to the first embodiment of the invention;
FIG. 10 is a detailed drawing of data reading side decrypting process and recording side encrypting process in FIG. 9, including the relation of data file recorded in a recording medium;
FIG. 11 is a detailed drawing of data reading side decrypting process and recording side encrypting process in FIG. 9, including the relation of data file recorded in a recording medium;
FIG. 12 is a data arrangement diagram of a recording medium having encrypted content and an encrypted encryption key recorded according to the invention;
FIG. 13 is a diagram for explaining an embedding method of secret information of the invention;
FIG. 14 is an ECC block diagram composed of 16 sets of recording sectors of a current DVD system;
FIG. 15 is a diagram showing a detail of one physical sector in which secret information is embedded;
FIG. 16 is an encrypting management system according to a second embodiment of the invention;
FIG. 17 is a diagram of configurations of "title key file" composed of plural multiple encrypted title keys and "move-key file" composed of plural encrypted move-keys used in the system in FIG. 16; and
FIG. 18 is an encrypting management system of a title key.

An embodiment of a content management method, a recording and reproducing apparatus, and a recording medium according to the present invention will now be described with reference to the accompanying drawings.

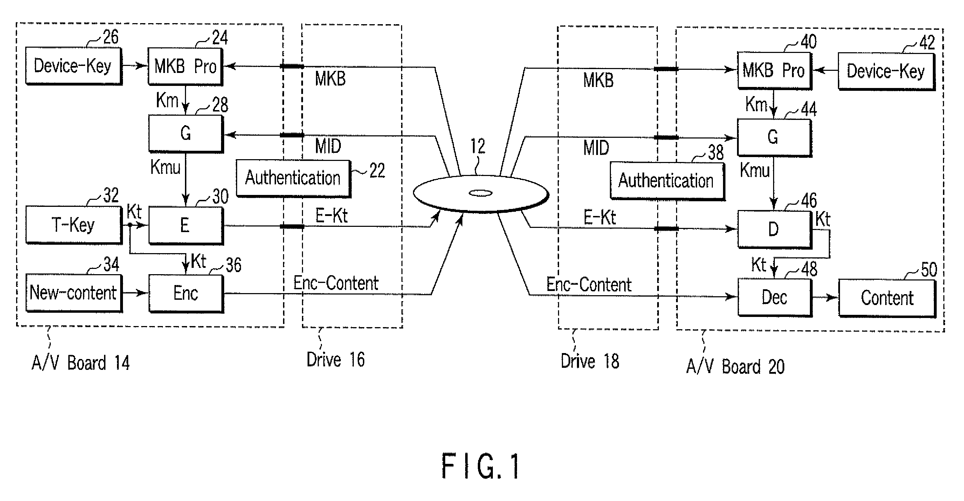

FIG. 1 is a processing system diagram showing a basic configuration of a CPRM method which is a copyright protection system according to the invention.

As shown in FIG. 1, in a recording medium 12, which may be DVD-RAM or DVD-RW disc, an encrypted encryption key block (MKB: medium key block) preliminarily encrypted by plural device keys and a disc specific ID (MID: medium ID) are recorded.

### (To record content in digital recording medium)

After conducting authentication 22 between the drive 16 and the A/V board 14, the drive 16 reads out the MKB and MID recorded in the recording medium 12, and sends them to the A/V board 14.

In the A/V board 14, a medium key (Km) is extracted by using the MKB input to an MKB processing unit (MKB-pro) 24 and a device key 26.

The extracted medium key (Km) and the MID read out from the recording medium 12 are input to a signal processing unit [G] 28 such as hash function device, and a medium specific key (Kmu) is generated.

A title key (Kt: T-key) 32 is input to an encrypting unit (E) 30, and encrypted by the medium specific key (Kmu), and recorded in a recording medium 12 as an encrypted title key (E-Kt).

On the other hand, the title key (Kt) 32 is input to an encrypting unit (Enc) 36, and a content (New content) 34 is encrypted. An encrypted content (Enc-content) is recorded in the recording medium 12.

### (To reproduce content from digital recording medium)

After conducting authentication between a drive 18 and an A/V board 20, the drive 18 reads out MKB and MID recorded in the recording medium 12, and sends them to the A/V board 20.

In the A/V board 20, the medium key (Km) is extracted by using the MKB input to an MKB processing unit (MKB-pro) 40 and a device key 42 owned by the A/V board 20.

The extracted medium key (Km) and the MID read out from the 12 disc are input to a signal processing unit [G] 44 such as hash function device, and the medium specific key (Kmu) is generated.

The encrypted title key (E-Kt) read out from the recording medium 12 is input to a decrypting unit (D) 46, and it is decrypted by using the medium specific key (Kmu) to generate a title key (Kt).

From the recording medium 12, an encrypted content (Enc-content) is input to a decrypting unit (Dec) 48, and decrypted by the title key (Kt), and plain text content (Content) 50 is generated.

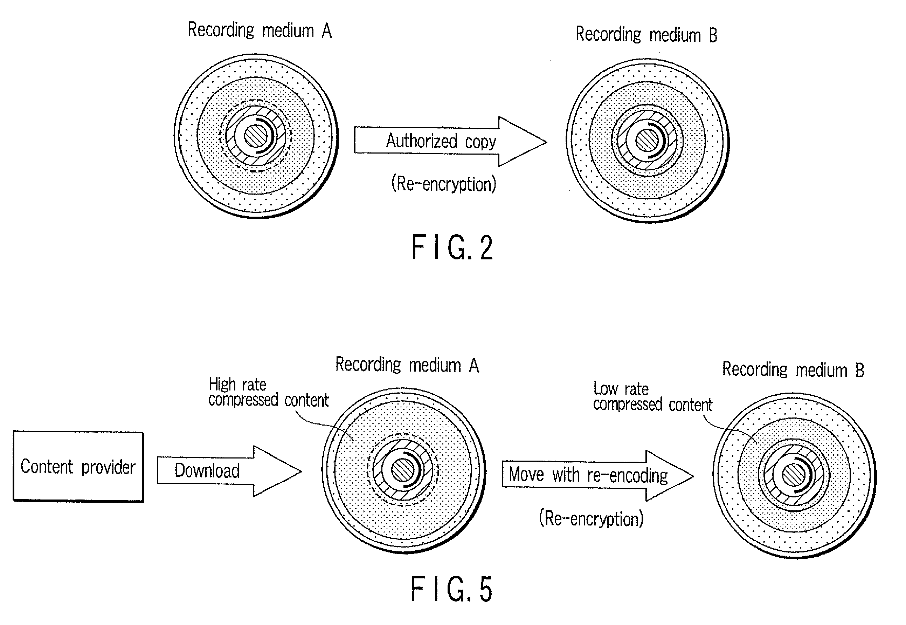

FIG. 2 is a diagram explaining the move process for moving a content from a recording medium A to a recording medium B. An encrypted content recorded in the recording medium A is decrypted and sent to a recording drive at the recording medium B side. The recording drive of the recording medium B encrypts the sent content again, and records the encrypted content in the recording medium B, and further encrypts a title key for encrypting the content at this time by the medium specific key of the medium B, and records in the recording medium B.

When transmission of content to the drive of the recording medium B side is completed, the drive of the recording medium A side stops reproducing operation, changes to a recording mode, and deletes a title key (- mark in FIG. 2) used for encrypting the content in the recording medium A. In this case, if there are plural content files in the recoding medium A, and a specific content file is sent to the recording medium B, only the content encrypting title key of the transmitted content is deleted. By this operation, the move process is terminated.

By the basic configuration of CPRM system explained in FIGS. 1 and 2, it is still possible to recover the encrypted content to be reproduced by reading out and saving the encrypted title key file recorded in the recording medium A before moving the content from the recording medium A to the recording medium B, and putting back the saved encrypted title key file to the recording medium A as it is to restore the encrypted title key which is deleted from the recording medium A after termination of a content move process. Such deed is violation of the contract in the content on the basis of copy-once copyright management.

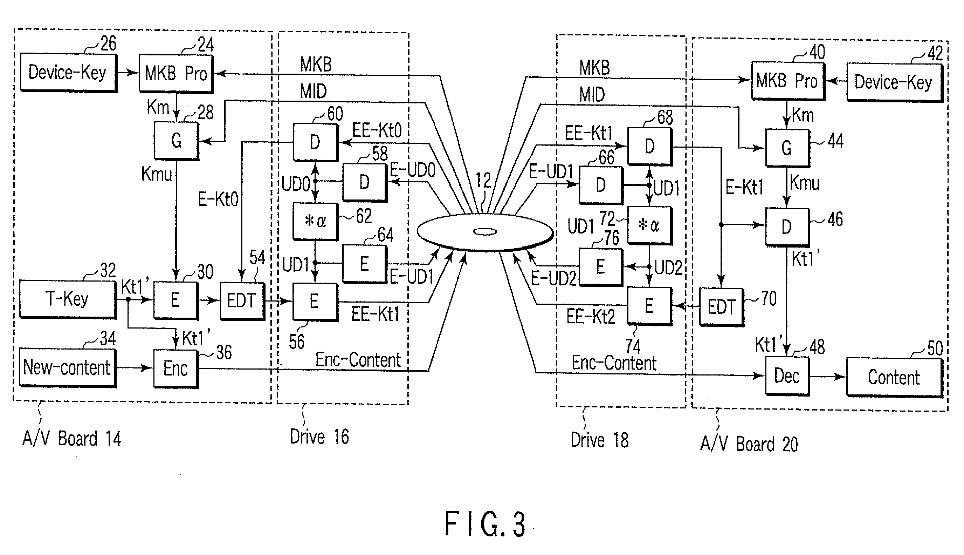

FIG. 3 is a diagram showing a copyright protection method capable of move process by using secret information recording and reproducing technology. By using the secret information recording and reproducing technology, it is possible to prevent illegal copy of reading and saving the encrypted title key file and putting back into the recording medium. The same portions as in FIG. 1 are indicated in the same reference numerals and their detailed description will be omitted. In FIG. 3, authentication between the drive and the A/V board is omitted.

### (To record content in digital recording medium)

After conducting authentication between the drive 16 and the A/V board 14, the drive 16 reads out MKB and MID recorded in the recording medium 12, and sends them to the A/V board 14.

In the A/V board 14, the medium key (Km) is extracted by using the MKB input to the MKB processing unit 24 and the device key 26.

The extracted medium key (Km) and the MID read out from the recording medium 12 are input to the signal processing unit [G] 28 such as hash function device, and the medium specific key (Kmu) is generated.

A title key (Kt1': T-key) 32 is input to an encrypting unit (E) 30, and an encrypted title key (E-Kt1') is generated by using the medium specific key (Kmu).

The encrypted title key (E-Kt1') is sent to an editor (EDT) 54 which adds the encrypted title key (E-Kt1') to encrypted title key (E-Kt0) read out from the recording medium 12. The output from the editor 54 is supplied to the drive 16, and is further encrypted by a secret information signal (UD: update) in an encrypting unit (E) 56, and recorded in the recording medium 12 as a multiple encrypted content encryption key (EE-Kt1).

On the other hand, the title key (Ktl': T-key) 32 is input to an encrypting unit (Ecn) 36, and encrypts a content (New content) 34. The encrypted content (Enc-content) is recorded in the recording medium 12.

The left side block of the recording medium 12 located in the center of FIG. 3 shows a configuration of a system of additionally recording a new encrypted content 34 in the recording medium 12 storing plural encrypted contents.

As encrypted contents, a plurality of multiple encrypted title keys (EE-Kt) are also recorded in the recording medium 12. A multiple encrypted title key (EE-Kt0) and encrypted secret information (E-UD0) recorded in the recording medium 12 are read out beforehand (before move process). The encrypted secret information (E-UD0) is decrypted into secret information (UD0) in a decrypting unit (D) 58, and by using this secret information (UDO), the multiple encrypted title key (EE-Kt0) is decrypted into an encrypted title key (E-Kt0) in a decrypting unit (D) 60. This encrypted title key (E-Kt0) is sent to the A/V board 14 of content encrypting side, and added to the encrypted title key (E-Kt1') in the editor (EDT) 54, and the added result is sent to the drive 16.

At the drive 16 side, the secret information (UD0) is updated to secret information (UD1) in an update unit (*α) 62. For example, the update unit (*α) 62 adds an integer (n) to the secret information (UD0) or increments the secret information (UD0) by the integer (n). Alternately, the update unit (*α) 62 updates the secret information (UD0) by using a random signal generator. The edited encrypted title key sent from the drive 16 is encrypted in the encrypting unit (E) 56 by using the updated secret information (UD1), and recorded in the recording medium 12 as the multiple encrypted title key (EE-Kt1).

The updated secret information (UD1) is encrypted in an encrypting unit (E) 64 by using a predetermined secret key or the medium specific key (Kmu) which is extracted in the drive. The encrypted updated secret information (UD1) is recorded in the recording medium 12 as encrypted secret information (E-UD1).

Such process is updated at every rewriting operation of the multiple encrypted title key, and the multiple encrypted title key is updated.

The right side block in FIG. 3 shows decryption of an encrypted content when moving an encrypted content.

### (To reproduce content from digital recording medium)

After conducting authentication between the drive 18 and the A/V board 20, the drive 18 reads out MKB and MID recorded in the recording medium 12, and sends them to the A/V board 20.

In the A/V board 20, the medium key (Km) is extracted by using the MKB input to the MKB processing unit 40 and the device key 42 of the A/V board 20.

The extracted medium key (Km) and the MID read out from the recording medium 12 are input to a signal processing unit [G] 44 such as hash function device, and the medium specific key (Kmu) is generated.

The encrypted secret information (E-UD1) is read out from the recording medium 12, and decrypted into secret information (UD1) in a decrypting unit (D) 66. From the recording medium 12, the multiple encrypted title key (EE-Kt1) is read out, and input to a decrypting unit (D) 68, and is decrypted by using this secret information (UD1) to generate an encrypted title key (E-Kt1).

The encrypted title key (E-Kt1) is input to a decrypting unit (D) 46, and is decrypted by using the medium specific key (Kmu) generated from the MKB and the MID. At this time, a plurality of title keys are generated, and a specific title key (Kt1') of the content to be moved is selected.

The encrypted content (Enc-content) read out from the recording medium 12 is input to a decrypting unit 48, and decrypted by the title key (Kt1'), and a plain text content (Contents) 50 is reproduced.

Together with this process, the editor (EDT) 70 deletes the specific title key (Kt1') from the encrypted title keys (E-Kt1) of the moved content and encrypted title keys (E-Kt2) are generated (updated). The secret information (UD1) decrypted in the decrypting unit (D) 66 is updated in an updating unit (*a) 72, and updated secret information (UD2) is generated.

Content playback includes mere playback and playback for move. The playback for move needs the editor 70, the updating unit (*a) 72, the encrypting unit (E) 74, and the encrypting unit (E) 76. However, the mere playback does not need these units. During the playback for move, the editor 70 deletes an encrypted title key for the moved content from the encrypted title key (E-Kt1) and outputs the remaining encrypted title key (E-Kt2).

The (updated) encrypted title key (E-Kt2) edited in the editor (EDT) 70 is encrypted by using the secret information (UD2) updated in an encrypting unit (E) 74, and recorded in the recording medium 12 as a multiple encrypted title key (EE-Kt2).

The updated secret information (UD2) is encrypted in an encrypting unit (E) 76, and recorded in the recording medium 12 as encrypted secret information (E-UD2).

By this process, in the recording medium 12, the title key (Kt1') of the moved content is deleted, and the encrypted content cannot be decrypted, and hence deleted substantially.

According to the system in FIG. 3, an encryption key of the title key is updated and changed by additional recording and move process. Therefore, even if the encrypted title key is saved beforehand and it is attempted to recover the title key according to the backup encrypted title key, the title key cannot be recovered and illegal copy by recovery of the encryption key can be avoided since the secret information (UD) for encrypting the title key has been updated. Thus, the move function can be supported by the copyright protection system shown in FIG. 3.

However, in the copyright protection system with the move function in FIG. 3, if the resolution (compression ratio) of content is changed when moving and the content is moved and recorded in a recording medium of smaller recording capacity, it is impossible to restore the original content of high quality.

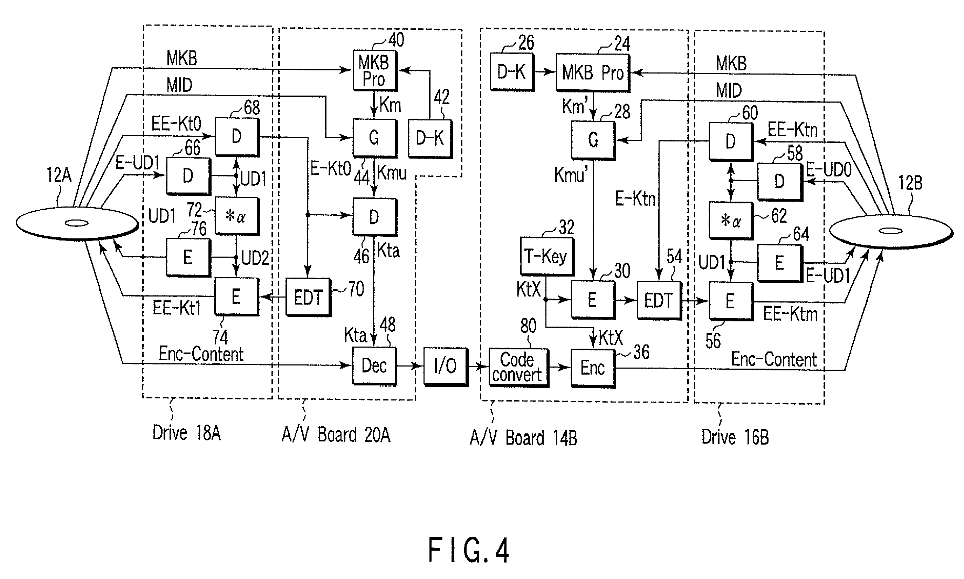

FIG. 4 is a system diagram showing a configuration of move and record of content after re-encode process by using the copyright protection system shown in FIG. 3.

In FIG. 4, a content is read out from a recording medium 12A by using a drive 18A and an A/V board 20A at the left side in FIG. 4 (corresponding to the right side in FIG. 3), and encrypted again by using a drive 16B and an A/V board 14B at the right side in FIG. 4 (corresponding to the left side in FIG. 3), and an encrypted content is recorded in a recording medium 12B.

By the reading process explained in FIG. 3, the content read out from the recording medium 12A is sent to the record drive 16B of the recording medium 12B via an I/O, and first input to a code converter 80 to be lowered in resolution, and encrypted again.

Further, by the writing process explained in FIG. 3, a plain text content generated from the code converter 80 is encrypted, and recorded in the recording medium 12B.

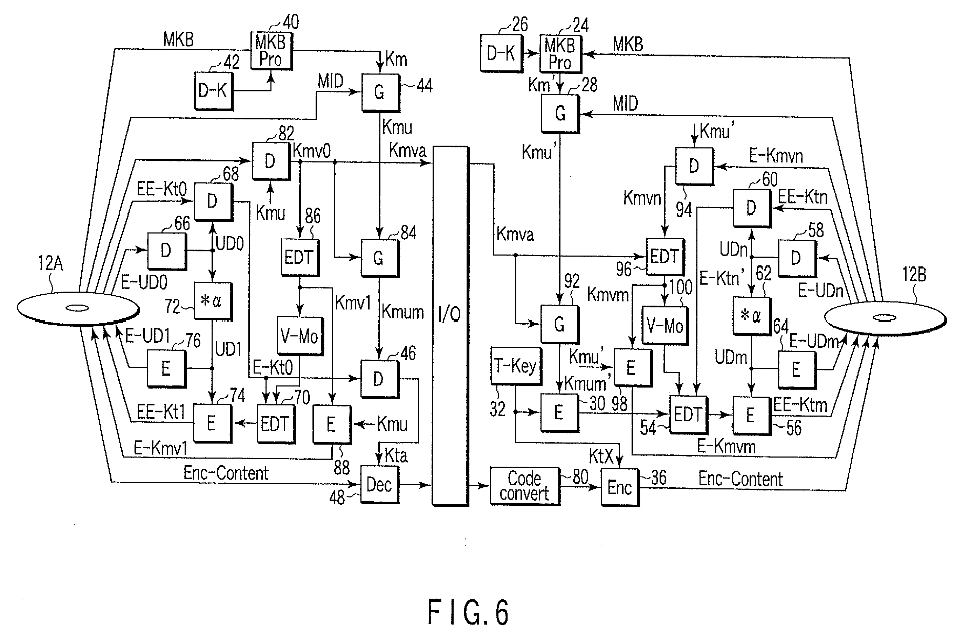

FIG. 5 is a diagram showing a content move process shown in FIG. 4. Herein, an encrypted content recorded in the recording medium is supposed to be one file. A recording medium A records an encrypted content compressed at a high rate. The read content (decrypted content) is encryption again into a content compressed at a low rate, and recorded in a recording medium B. Thus, the content is moved from the medium A to the medium B with re-encode.

As shown in FIG. 5, the encrypted title key of the recording medium A is deleted after the content is copied, and the content is deleted substantially from the viewpoint of file management. Since the title key used for decrypting is deleted, the encrypted content cannot be restored, and while protecting the copyright, the content can be moved between recording media, and can be used in a desired or preferred state for the user.

Although the move process is an important function, if re-encode is performed in order to reduce the data size for using the content in a portable appliance, an original content of high quality cannot be reproduced. A new copyright protection system can prevent an illegal copy of restoring a deleted encrypted content by a method of recovering the title key by illegal process with regard to a recording medium from which the title key has been erased after authorized move process and then can provide the move function. However, if re-encode of content or similar process is performed in move process of a high quality content, there is no method of restoring the high quality content. In other words, the authorized user purchasing a content of high quality is not allowed to lower the resolution of the content temporarily depending on the mode of use, which means the convenience for the user is lowered.

In the light of such circumstance, an example of changing "content move" function into "move of content reproduction right" function is explained below.

FIG. 6 is an example of an encrypting management system of the invention. In FIG. 6, divisions of the drive and the A/V board are omitted. When compared with FIG. 4, a move-key (Kmv) is newly added, and others are the same. The title key (T-key) 32 is encrypted by using the medium specific key (Kmum) which is generated from the medium key (Kmu) and the move-key (Kmv). Thus, the move-key (KmV) is used for encrypting or decrypting a title key encrypting or decrypting a content in the encrypting unit (E) 30 or decrypting unit (D) 46, and unlike the prior art, the title key is not deleted but the move-key is deleted when moving the content, so that the content may not be reproduced (decrypted). The move-key (Kmv) forms pair with the content, and the pair moves between recording media, and in the recording medium at the destination of move, the move-key (Kmvm) is newly encrypted by the encrypting unit (E) 98 by using a medium specific key (Kmum) of the recording medium at the destination of move and recorded. In the invention, however, since re-encode move is allowed, the same content different only in the resolution may be already recorded in the recording medium at the move destination. Accordingly, if the same content different in resolution has been already recorded at the site of destination, the content is not moved, and only the move-key is moved. That is, in the case of attempt to return the content to the original recording medium, if an encrypted content in a state disabled to be decrypted is already recorded in the original recording medium, only by moving the move-key, the encrypted content can be decrypted. A detailed operation of such processing is as follows.

After the authentication between the drive and the A/V board (not shown), the drive reads out MKB and MID recorded in the recording medium 12A, and sends them to the A/V board.

In the A/V board, the medium key (Km) is extracted by using the MKB input to the MKB processing unit 40 and the device key (D-K) 42 of the device.

The extracted medium key (Km) and the MID read out from the recording medium 12 are input to a signal processing unit [G] 44 such as hash function device, and the medium specific key (Kmu) is generated.

The encrypted move-key (E-Kmv0) recorded in the recording medium 12A is readout, and input to a decrypting unit (D) 82, and decrypted by using the medium specific key (Kmu), and a move-key file (Kmv0) is generated.

From this move-key file (Kmv0) a move-key (Kmva) corresponding to the content to be moved is extracted, and it is input to a signal processing unit [G] 84 together with the medium specific key (Kmu) generated in the signal processing unit [G] 44, and a medium specific move-key (Kmum) is generated.

From the recording medium 12A, encrypted secret information (E-UD0) is read out, and decrypted into secret information (UD0) in a decrypting unit (D) 66. On the other hand, from the recording medium 12A, a multiple encrypted title key file (EE-Kt0) is red out, and input to a decrypting unit (D) 68, and decrypted by using the secret information (UD0) to generate an encrypted title key file (E-Kt0).

This encrypted title key file (E-Kt0) is input to a decrypting unit (D) 46, and decrypted by using the medium specific move-key (Emum), and thereby the title key (Kta) corresponding to the content to be moved is generated.

An encrypted content (Enc-content) read out from the recording medium 12A is input to the decrypting unit (Dec) 48, and decrypted by using the title key (Kta). Thus, a plain text content (Content) is generated. At this time, the move-key (Kmva) corresponding to the content is sent to the drive at the recording medium 12B side together with a plain text content via an interface (I/O), and newly encrypted, and recorded in the recording medium 12B.

Not relating to the scope of the invention, content data and move-key data output through the I/O are encrypted and decrypted in conforming to other digital interface standards, and, as a matter of course, criminal copying is prevented in data transmission between devices.

When the content and the move-key (Kmva) are transmitted to the recording medium 12B side, at the recording medium 12A side, first, the move-key file (Kmv0) is input to an editor (EDT) 86, and the move-key (Kmva) corresponding to the moved content is deleted from the key file, and a new move-key file (Kmv1) is generated. This new move-key file (Kmv1) is input to an encrypting unit (E) 88, and encrypted by using the medium specific key (Kmu), and recorded in the recording medium 12A as an encrypted move-key (E-Kmv1).

At the same time, the move-key file (Kmv1) is input to move-key verify data processing unit (V-Mo) 90, and move-key verify data (V-Mo1) is generated. The move-key verify data (V-Mo1) and encrypted title key (E-Kt0) data are input to the editor (EDT) 70, and an encrypted title key (E-Kt1) is generated. Herein, however, the title key (Kta) corresponding to the moved content is not deleted.

On the other hand, the secret information (UD0) decrypted in the decrypting unit (D) 66 is updated in the updating unit (*α) 72, and the updated secret information (UD1) is generated.

The encrypted title key (E-Kt1) edited in the editor (EDT) 70 is input to an encrypting unit (E) 74, and encrypted by the updated secret information (UD1) output form the updating unit (*α) 72, and recorded in the recording medium 12A as the multiple encrypted title key (EE-Kt1).

The updated secret information (UD1) is encrypted in the encrypting unit (E) 76, and recorded in the recording medium 12A as encrypted secret information (E-UD1).

Thus, the title key for decrypting the encrypted content is not deleted in the move process, but is left over in the original recording medium with being encrypted. On the other hand, the move-key (Kva) necessary for decrypting this encrypted title key is deleted from the original recording medium. Therefore, even if keys capable of being decrypted in the recording medium 12A are combined, a title key for decrypting the encrypted content cannot be decrypted since the move-key is not present.

In this manner, if it is attempted that the content is return to the original medium from the content storing medium by moving the content from the content storing medium to the original medium, the content left over in encrypted state can be returned to a decryptable state by returning the move-key only. Such process enables to return the information quantity to the original quantity by returning to the original recording medium when the content is moved by down-converting into smaller information quantity, for example, in the first move. In other words, the image once deteriorating in picture quality by down-converting can be returned to the original level.

Operation of recording content in the recording medium 12B is explained below.

In the drive at the recording medium 12B side, plain text content data and the move-key (Kmva) transmitted via the interface (I/O) are encrypted.

A content which is re-encoded by the code converter 80 is input to an encrypting unit (Enc) 36, and encrypted by using a title key (Ktx) 32 newly generated by a random number generator or the like, and recorded in the recording medium 12B as an encrypted content (Enc-content).

Reading MKB from the recording medium 12B, it is input to an MKB processing unit 24, and a device key (Km') is extracted by using a disk key (D-K) 26 individually provided in the device. Then, reading MID from the recording medium 12B, it is input to a signal processing unit [G] 28 such as hash function device together with the device key (Km'), and a medium specific key (Kmu') is generated.

The move-key (Kmva) transmitted from the recording medium 12A side via the interface (I/O) is input to a signal processing unit [G] 92 such as hash function device together with the medium specific key (Kmu'), and a medium specific move-key (Kmum') is generated.

A title key (Ktx) 32 generated in the random number generator or the like is input to an encrypting unit (E) 30, and encrypted by using the medium specific move-key (Kmum'), and an encrypted title key (E-Ktx) is generated.

A move-key file (E-Kmvn) recorded in the recording medium 12B is read out, and input to a decrypting unit (D) 94, and is decrypted by using the specific key (Kmu') of the recording medium 12B, and a move-key file (Kmvn) is generated. This move-key file (Kmvn) and the move-key (Kmva) are input to an editor (EDT) 96, and a move-key file (Kmvm) to which the move-key (Kmva) is newly added is generated.

The move-key file (Kmvm) is input to an encrypting unit (E) 98, and encrypted by using the medium specific key (Kmu'), and an encrypted move-key file (E-Kmvm) is generated and recorded in the recording medium 12B.

Encrypted secret information (E-UDn) is read out from the recording medium 12B, and decrypted into secret information (UDn) in the decrypting unit (D) 58. On the other hand, a multiple encrypted title key file (EE-Ktn) is read out from the recording medium 12B, and input to a decrypting unit (D) 60, and an encrypted title key file (E-Ktn) is decrypted by using the secret information (UDn).

The move-key file (Kmvm) is input to a move-key verify data processing unit (V-Mo) 100, and move-key verify data (V-Mon) is generated. This move-key verify data (V-Mon) and an encrypted title key (E-Ktx) are input to the editor (EDT) 54, and an encrypted title key (E-Ktm) is generated. Herein, the encrypted title key (Ktx) and the verify data (V-Mo) of the move-key file (Kmvm) are combined together as a set, and an encrypted title key (E-Ktm) is generated.

On the other hand, the secret information (UDn) decrypted in the decrypting unit (D) 58 is updated in an updating unit (*α) 62, and updated secret information (UDm) is generated.

The encrypted title key (E-Ktm) edited by the editor (EDT) 54 is input to an encrypting unit (E) 56, encrypted by the updated secret information (UDm), and recorded in the recording medium 12B as multiple encrypted title key (EE-Ktm).

The updated secret information (UDm) is encrypted in an encrypting unit (E) 64, and recorded in the recording medium 12B as encrypted secret information (E-UDm).

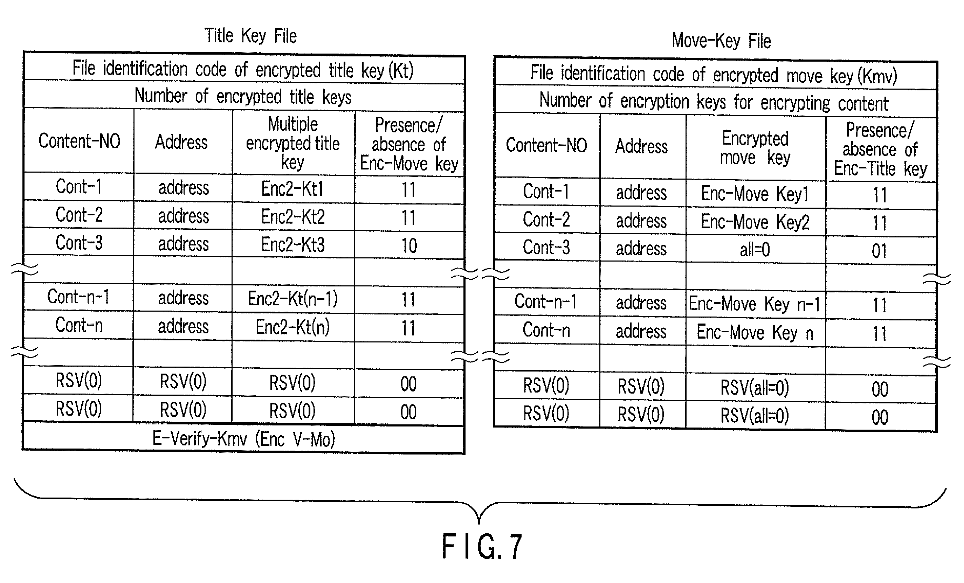

FIG. 7 is a diagram of a configuration of "Title key file" composed of plural multiple encrypted title keys and "Move-key file" composed of plural encrypted move-keys used in the invention.

In each title key, a content number (content identification ID), address data recording an object content, a multiple encrypted title key (Enc2-Ktn: same as EE-Ktn), and information showing presence or absence of a title-key and a move-key in a recording medium are composed as a set of title key information, and they are assembled in a plurality of sets. The information showing presence or absence includes "11" (both of the title-key and move-key are present), "10" (the title-key is present but the move-key is not present), and "00" (both of the title-key and move-key are not present). The file also includes data of verify data of a move-key (Enc V-Mo) which has been encrypted by secret information (UD). A file identification code of encrypted title key indicates that the file is an encrypted title key file.

In each move-key, a content number (content identification ID), address data recording an object content, an encrypted move-key (E-Kmv), and information showing presence or absence of a title key and a move-key in a recording medium are composed as a set of move-key information, and they are assembled in a plurality of sets. The information showing presence or absence includes "11" (both of the title-key and move-key are present), "01" (the move-key is not present but the title-key is present), and "00" (both of the title-key and move-key are not present).

When the content is moved, an encrypted content is left over in the original medium of source of move, and the content move-key (E-Kmv) corresponding to the moved content is deleted from the move-key file (changed to all "0" s). The information showing presence or absence in the title key file is changed to "10" and that in the move key file is changed to "01". The move-key file is corrected (or updated) as a new move-key file. The tile key of the moved content is not deleted from the encrypted title key file. However, the verify data of a move-key (V-Mo) is updated based on the new move-key file, encrypted by secret information update data (UD), and is recorded as the updated encrypted move-key file (Enc V-Mo).

Thus, the title key of a content moved from the first medium to another medium is left over (encrypted) in the first medium, but decrypting of the encrypted title key is difficult unless the move-key which has been deleted from the first medium is supplied. On the other hand, if the move-key is saved by copying the encrypted move-key file before move, and recovered from the copied encrypted move-key file after move process, it is not matched with the move-key verify data (Enc V-Mo) included in the title key file, and all usable title keys cannot be decrypted, and such illegal process can be prevented. If a move key for decrypting contents is deleted, the deleted encrypted title key cannot be decrypted. The remaining encrypted title keys corresponding to the remaining move keys can be decrypted. However, if the move key file from which some move keys are deleted is restored to the original move key file from which no move key is deleted, the verify data cannot be verified so that all the title keys cannot be used. This prevents an illegal backup and restore of the move key file.

By composing such encrypted title key file and encrypted move-key file, if a content of the same content number is moved again to a certain medium while repeating move process, it is possible to reproduce high quality original data which is deteriorated in data quality by a re-encode move, by selecting either to use the encrypted content unable to be reproduced and decrypted but recorded in the certain medium, or to record by encrypting the moved content newly transmitted.

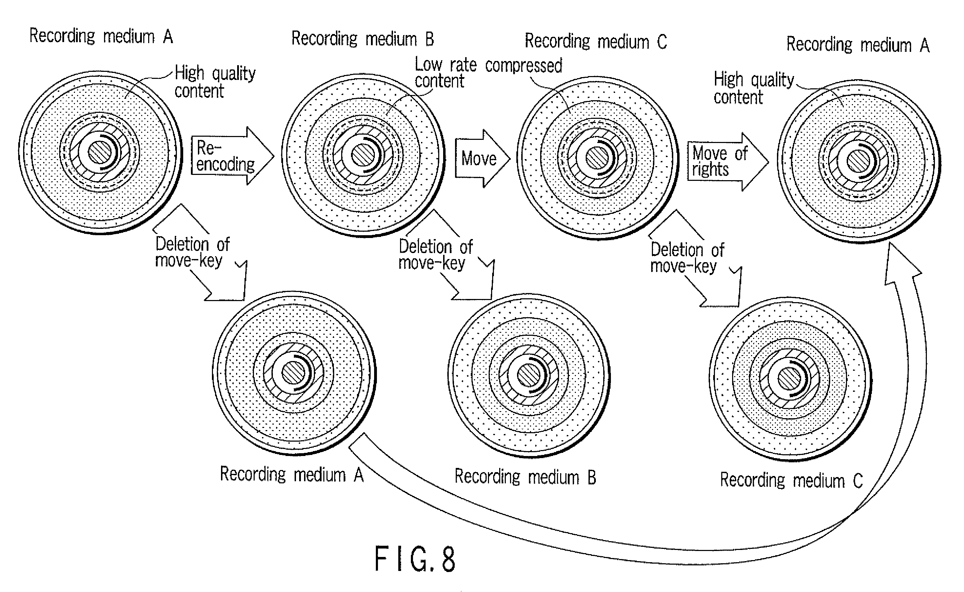

FIG. 8 is a diagram of state transition of each recording medium when the content is moved between plural recording media.

A high quality content recorded in the recording medium A is re-encode, and moved to the recording medium B. In the recording medium B, an encrypted content of low compression rate, the multiple encrypted title key, and the encrypted move-key file are recorded. By this move process, the encrypted move-key for an object content is deleted from the recording medium A. By ordinary move process, a content is moved to a recording medium C from the recording medium B. At this time, a move-key of the content is deleted from the recording medium B.

When a content is moved from the recording medium C to the original recording medium A, by confirming that the content number is the same, an encrypted content which cannot be decrypted and is already recorded in the recording medium A is kept recorded in the recording medium A and the content in the recording medium C is not moved, and only the move-key is moved to the recording medium A.

By this process, conditions are ready for decrypting the title key for decrypting an encrypted content recorded in the recording medium A presently difficult to be decrypted, and the encrypted content can be decrypted, and as a result, the recording medium A recording the original high quality content is restored.

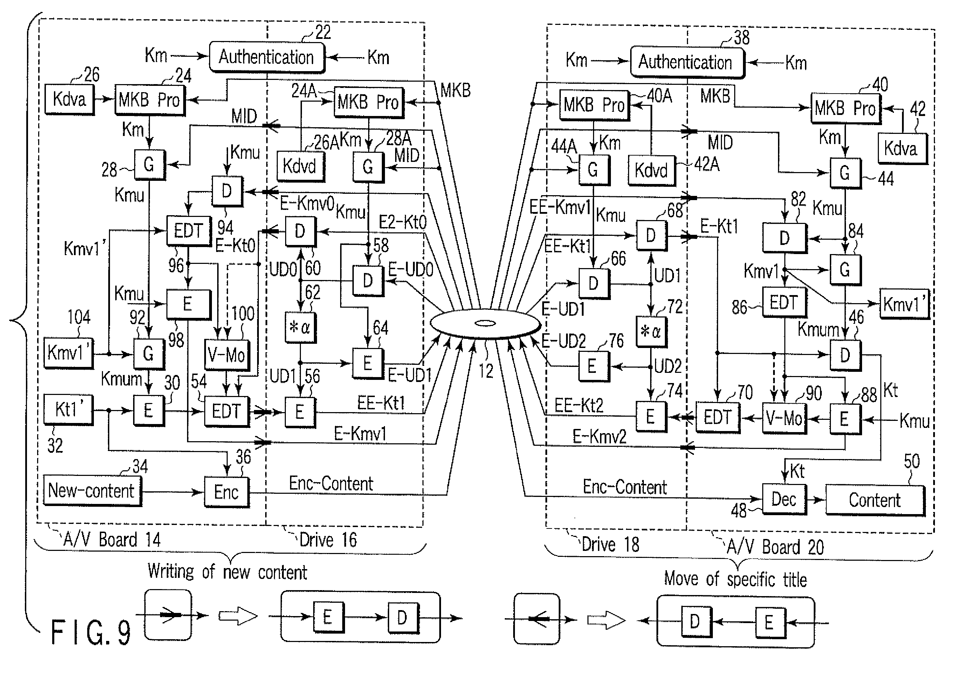

FIG. 9 is a diagram of a configuration of copyright protection system capable of re-encode move of content.

Basic operation is the same as that in FIG. 6. That is, FIG. 6 shows the relation between a content supply side drive and a content reception side drive in move process, while FIG. 9 shows the recording and encrypting process of a new content, and the reading and decrypting process in move process of a specific content.

Although shown together without distinguishing in FIG. 6, by dividing into the A/V board for content encoding process and the drive for recording and reproducing process in FIG. 9, the relation of arrangement of each encrypting process is also shown.

A new content 34 is encrypted by an encrypting unit 36 by a title key (Kt1') 32 generated by an A/V board 14, and sent to a drive 16. The title key (Kt1') is encrypted by an encrypting unit 30 by a medium specific key (Kmu) which is generated from a signal processing unit [G] 28 by MKB and MID read out from a recording medium 12 beforehand and a medium specific move-key (Kmum) generated from a signal processing unit [G] 92 by a new move-key (Kmv1') 104, and encrypted title key (E-Kt1') is generated. Similarly, a move-key file (E-Kmv0) for a recorded encrypted content read out from the recording medium 12 beforehand is decrypted by the medium specific key (Kmu) by a decrypting unit (D) 94 to generate a move-key (Kmv0). The move-key (Kmv0) is combined with the above new move-key (Kmv1') 104 by the editor (EDT) 96, and a move-key (Kmv1) is generated. This move-key (Kmv1) is encrypted by the medium specific key (Kmu) by an encrypting unit (E) 98, and sent to the drive 16 as an encrypted medium specific key (E-Kmvl). From the recording medium 12, a multiple encrypted title key file (E2-Kt0) for a recorded encrypted content is read out, and decrypted by secret information (UD0) recorded in the same recording medium 12 by the decrypting unit (D) 60 in the drive 16, and sent as an encrypted title key file (E-Kt0) from the drive 16 to the A/V board 14.

Further, verify data (V-Mo1) of the above move-key (Kmv1) is detected by a move-key verify data processing unit (V-Mo) 100, and the verify data (V-Mo1) is combined with the encrypted title key file (E-Kt0) and encrypted title key file (E-Kt1') by the data editor (EDT) 54. An encrypted title key file (E-Kt1) is generated from the data editor (EDT) 54 and is sent to the drive 16.

To the move-key verify data generator (V-Mo) 100, move-key verify data (V-Mo0) in the encrypted title key file (E-Kt0) first recorded in the recording medium 12 and obtained by the decrypting unit 60 and a move-key (Kmv1) which is obtained by adding a new move-key (Kmv1') 104 to a move-key (Kmv0) which is obtained by decrypting a read encrypted move-key (E-Kmv0) by the editor 96 are supplied. The move-key verify data generator (V-Mo) 100 obtains verify data based on the move-key file data (Kmv0) from which the new move-key (Kmv1') is removed, and checks if it coincides with the verify data (V-Mo1) included in the encrypted title key file (E-Kt0) or not, and checks if illegal recording is present or not in the recorded encrypted content. One example of verify data generation includes calculation of a function of the title key and rounding off the result of the calculation to a predetermined order. For example, move-key 1 is multiplied with function α, the result is added with move-key 2, the result is multiplied with function α², the result is added with 0, the result is multiplied with function α³, and so on. The verify data generation is not limited to the above method. Further, new verify data (V-Mo1) of the move-key (Kmv1) is calculated and generated, and added to the encrypted title key file (E-Kt1) by the editor (EDT) 54. Thus, the encrypted content (Enc-content) sent from the A/V board 14 is directly recorded in the recording medium 12, and the updated encrypted move-key file (E-Kmvl) is overwritten on the encrypted move-key file (E-Kmv0) before updating.

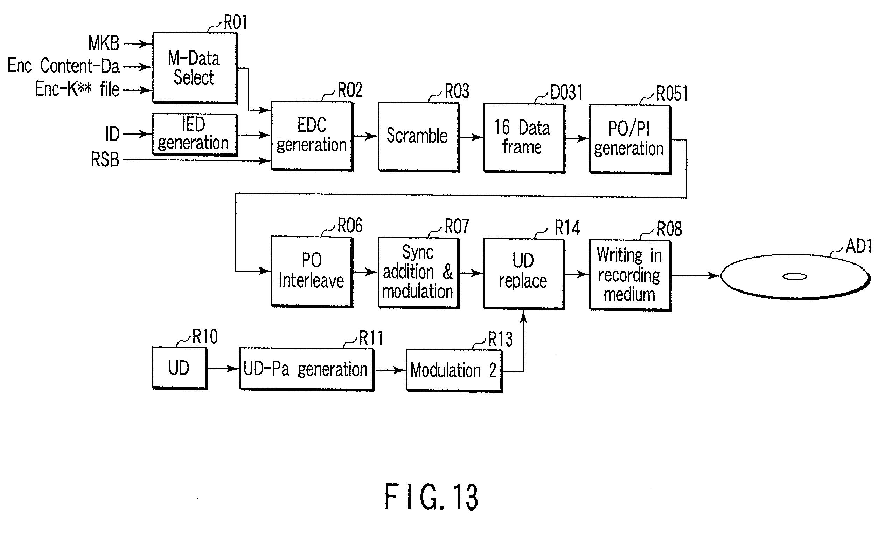

By the encrypting unit 56 in the drive 16, the encrypted title key file (E-Kt1) is encrypted by the update secret information (UD1) which is obtained by updating the secret information (UD0) read out beforehand and the multiple encrypted title key file (E2-Kt1) is recorded in the recording medium 12. Similarly, the secret information (UD1) is encrypted by the medium specific key (Kmu) by an encrypting unit 64, and written in the recording medium 12 by a special recording method as shown in FIGS. 13, 14, and 15 as encrypted secret information (E-UD1). The special recording method means that the recorded data cannot be reproduced by a normal reproduction method. If an error correction code is added to main data and secret information is added (for example, by an exclusive-OR operation), the secret information becomes an error for the main data. Therefore, when the main data is subjected to an error correction processing, the secret information is disappeared from the main data. Since the error correction processing is performed within a drive, an illegal copy operation performed outside the drive can be prevented.

In the relation between the A/V board and the drive, between the drive which is PC (personal computer) peripheral device and the A/V board assembled at the PC side, probability of illegal copy is high in the data transmission between them.

At present, accordingly, authentication is conducted between the drive and the A/V board, and in data transmission, the data is encrypted and transmitted by using time limit encryption/decryption key (Bus-key) that is valid only if authentication is successful. That is, after authentication, when mutually confirmed that the partners do not act illegally, the data transmitting side sends the transmission data by encrypting by Bus-key, and the receiving side receives the encrypted transmission data by decrypting by Bus-key.

This process is conducted in an authentication block and the thick line portions of each transmission line between the drive and the A/V board in FIG. 9.

The reading and decrypting process mechanism in move process of a specific content in FIG. 9 is the same as explained in FIG. 6. As the recording side encrypting process, a move-key verify data processing unit (V-Mo) 90 includes a function of checking if illegal recording is made in the encryption key or not, from the move-key (Kmv) recorded in the recording medium 12 and the move-key verify data (Enc V-Mo) included in the encrypted title key file (E-Kt), and if it is determined that the illegal recording is found, reproduction is rejected.

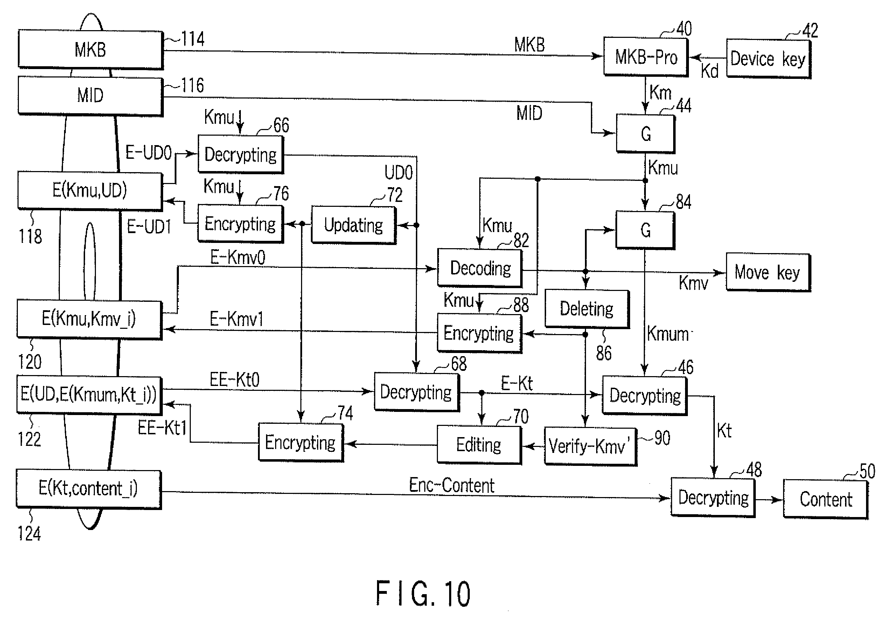

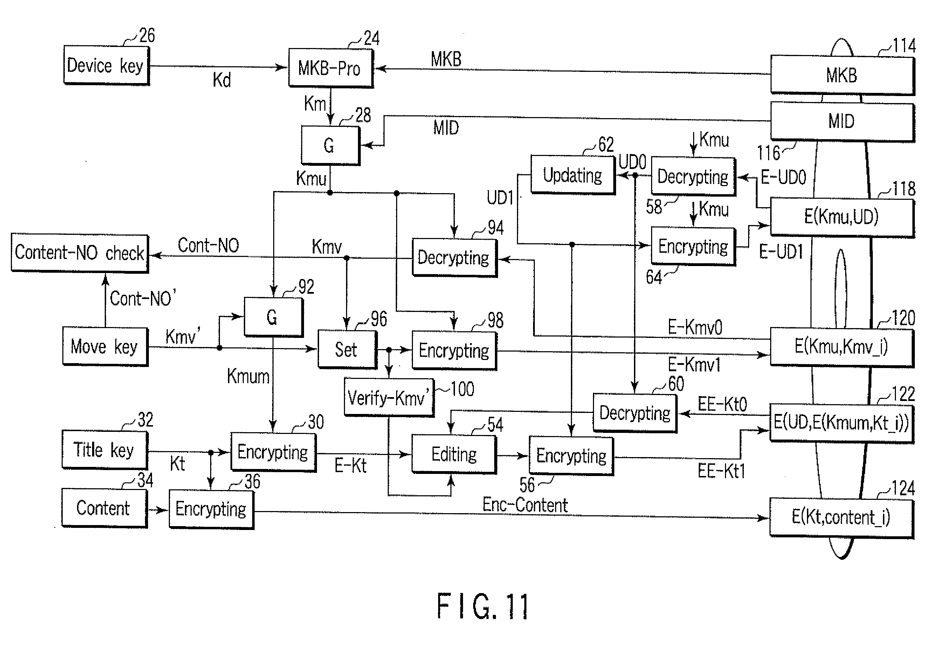

FIGS. 10 and 11 show specifically data reading side decrypting process and recording side encrypting process in FIG. 9, including the relation of data file recorded in the recording medium.

In FIG. 10, the relation between the data file recorded in the recording medium 12 and the encrypting management system is explained. In the following explanation, the encrypted data is partly expressed as "E (encryption key, data to be encrypted)", in order to clarify the relation between the key to be encrypted, and the encryption key used in encrypting.

A pre-recorded MKB file 114 is an encrypted key block from which a medium key (Km) used in encrypting and decrypting process is extracted.

An MID 116 is specific identification information of the recording medium 12 recorded in a BCA (burst cutting area) at the innermost periphery of the recording medium 12 used in the current DVD-RAM standard or the like. By incorporating this identification information into the encrypting management system, encryption works as medium binding function on the recording medium. As a result of processing, the medium key (Km) extracted from the MKB 114 and the MID 116 are synthesized in a function generator [G] 44, and a medium specific key (Kmu) is generated. Since this medium key (Kmu) functions as specific encryption key of the object medium, the data encrypted by this key, if wholly copied to other recording medium, cannot be decrypted because the medium specific key (Kmu) of the medium is different.

E(Kmu, UD) 118 is secret information data recorded by a special recording and reproducing method by encrypting secret information (UD) by the medium specific key (Kmu). The secret information (UD) is updated and recorded every time the content is read out for move processing unit and a new content is recorded. In mere content reading and reproducing process, the same recording state of the secret information (UD) continues.

E (Kmu, Kmv_i) 120 is a move-key file. It is a set of plural move-keys encrypted by the medium specific key (Kmu). In a reproduction operation, the encrypted move-key (E-Kmv) read out is decrypted by the medium specific key (Kmu), and the move-key (Kmv) of the content is detected from specified content identification information, and synthesized with the medium specific key (Kmu) by a function generator 84, and medium specific move-key (Kmum) is generated. In reproduction in move process, the medium specific move-key (Kmum) is transmitted to outside together with the move-key relating to the moved content and the moved content in pair, after decrypting process of the encrypted title key, and the move-key is deleted from the move-key file. The move-key file is encrypted by the medium specific key (Kmu) and rewritten as a new move-key file. At this time, from new move-key file data before encrypting by the medium specific key (Kmu), new verify data of the move-key is calculated and generated. The new verify data is sent to a block for combining new title key file data and is incorporated into the title key file.

E (UD, E (Kmum, Kt_i)) 122 is a multiple encrypted title key file. This is a file of a set of plural encrypted title keys and move-key verify data which are multiple encrypted by the secret information (UD) recorded and reproduced only in the drive. In reproduction operation, E (UD, E (Kmum, Kt_i)) 122 is decrypted by the secret information (UD) demodulated in the drive and the encrypted title key file (E-Kt) is generated. The encrypted title key file (E-Kt) is decrypted by the medium specific move-key (Kmum) and the title key file (Kt) is generated. A title key file (Kt) of an object content is supplied to a content decrypting unit 48. In the move process reproduction operation, move-key verify data calculated from a move-key file from which the move-key corresponding to the moved content is deleted is replaced with the former verify data attached to the encrypted title key file (E-Kt) and a new encrypted title key file (E-Kt) is generated. The new encrypted title key file (E-Kt) is sent to the drive, encrypted by updated new UD data, and recorded in the recording medium. That is, in move process, the encrypted title key relating to the moved content is not deleted, and is left over, and the data file of moved content is present, but the encrypted title key is changed to identification code as information indicating that the title key cannot be decrypted. When a content deletion command is given, of course, the encrypted title key of the object content is deleted, and other information is also deleted so that the deleted content may not be present.

E (Kt, content_1) 124 is a content file encrypted by the encryption key (Kt).

FIG. 11 shows an encrypting management process, including the relation between data file recorded in the recording medium and a new file when recording a new content. In recording, three types are considered, that is, "recording of a content newly from some other source (generation of a new move-key)", move process recording of "recording of a new content forming pair with a move-key", and "determining, based on the content number (content identification information) included in move-key data", whether an encrypted content presents in the recording medium wherein a move-key of the same identification number is deleted. A recording side encrypting management process is composed so as to be applicable to all these requests.

A prerecorded MKB file 114 is used in the mode as explained above.

An MID 116 is also the same as explained above.

E(Kmu, UD) file 118 is updated to new data every time a move-key file or a title key file is rewritten as in FIG. 10, and is encrypted and rewritten by the medium specific key (Kmu) by the encrypting unit 64.

E(-,Kmu, Kmv_i) file 120 is a move-key file, and in the case of move record or when a new content is recorded, a new move-key is added, and a new file is encrypted and rewritten by the medium specific key (Kmu) by an encrypting unit 98. This is a content file managed by own self, and in a completely new content, a content management number (identification ID) and a new move-key are generated, and these generated keys are added to the move-key file recorded in the recording medium, and a new move-key file is generated, encrypted and recorded in the recording medium. When the input content is accompanied by a move-key, it is determined whether the recording medium stores a content whose identification number coincides with that of the input content. If they coincide with each other and the content recorded in the recording medium is not subjected to a re-encode move process, the content data is not recorded, and only the move-key is added to the move-key file in a specified position and rewritten. If they do not coincide with each other, as in recording of a new content, the move-key file and the content file are recorded in the recording medium. In this case, the move-key is recorded as a move-key of the recording content.

E (UD, E (Kmum, Kt_i) file 122 is a title key file. When recording a new content, a title key 32 is newly generated by a random number generator or the like, and combined with the title key of another content recorded in the recording medium by an editor 54, and edited as a new title key file together with a new move-key verify data, and multiple encrypted and recorded by the encrypting unit 56 by secret information (UD) updated by the updating unit 62 in the drive. In move recording, a content number (identification ID) in move-key information sent in pair with a content is compared with content number information already recorded in the recording medium to determine if the same content is already recorded or not, and when the same content is recorded, the new title key is not issued, and only verify data of the new move-key file is rewritten, and a new encrypted title key file is generated, and multiple encrypted by the updated UD, and recorded in the recording medium. If the same content is not recorded, a new title key is issued, and used in encrypting of the input content, and at the same time a new title key is encrypted by the medium specific move-key (Kmum) generated by the medium specific key (Kmu) extracted from the MKB and MID recorded in the recording medium in the drive and the move-key (Kmv) sent in pair with the content. The new title key is added to the recorded encrypted title key file, and a new title key file is composed, and multiple encrypted by the updated UD, and recorded in the recording medium.

E (Kt, content_i) 124 means plural content files encrypted by the title key (Kt). When the same content has been already recorded when moving, it can be selected whether or not to record the encrypted content. When already recorded, in the case where high quality data is recorded, the moved content data is not recorded. In the case where high quality data is recorded, the moved content data is not recorded. In the case where high quality data is not recorded, i.e, the quality of the recorded data is the same or lower, it is up to the user's decision.

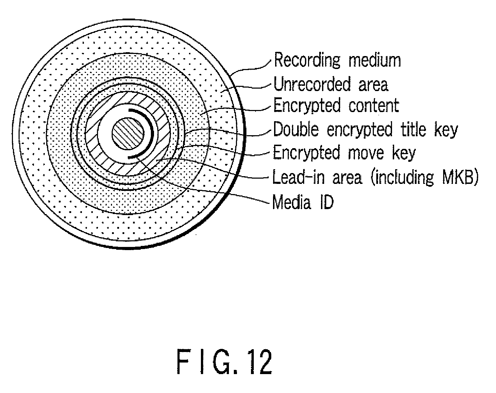

FIG. 12 is a data composition diagram of the recording medium having an encrypted content and an encrypted encryption key recorded according to the present invention. Medium ID (MID) is information data written in advance in the BCA provided at the inner side of the lead-in area. In a recording and reproducing medium, since an ID number is recorded individually, by introducing the ID number in the encrypting management system, the encryption key becomes a specific key in each medium, and it is expected to have an effect of binding in a recording medium recording an encrypted content. MKB is a bunch of keys prerecorded in the lead-in area, and the same medium key (Km) can be extracted by the device key (D-K) distributed individually in the recording and reproducing apparatus. At the inner peripheral side of data area, the move-key file of the invention and double encrypted title key file are recorded. On the outer periphery, an encrypted content file is recorded.

FIG. 13 is a diagram for explaining the embedding process method of the secret information UD of the invention. An M-Data Select R01 selects MKB (media key block) for encryption, encrypted content, and encryption key for encryption/decryption to be recorded into the disk AD1. An IED generation generates an IED (ID Error Detection code) for ID (Identification Data) of a physical data block called sector. The ID includes a sector number and sector information. First, the data desired to be recorded is combined with sector ID and others in the data frame unit of 2K bytes, and is input to a scramble processing unit R03 via an error detection code (EDC) generator R02. Herein, for the purpose of stabilization of servo system, scramble process is conducted to prevent the same data from being continuous. Output data of the scramble processing unit R03 is input to a 16 data frame processing unit D031, and 16 sets of data frames are combined. The data is input to a PO/PI generator R051, and an error detection and correction code (PO/P1) is generated.

Consequently, the data (PO/PI) is input to a PO interleave processing unit R06, and PO is processed by interleaving, and dispersed and disposed, and an ECC block by 16 sets of recording sectors is composed. The output data of the PO interleave processing unit R06 is input to a sync addition and modulator processing unit R07, and sync signal is added and modulated in every specific data length. The output data of the processing unit R07 is input to a UD replacement unit R14, and 16 sets of physical sectors are generated.

On the other hand, in a UD-Pa (UD parity) processing unit R11 and a modulation-2 unit R13, a UD signal R10 is modulated by a special modulator R13, and the modulated UD partly replaces with the output data of the processing unit R07 in the UD replacement unit R14. It is then recorded in a recording medium AD1 via a recording medium writing unit R08.

By such process, the portion replaced by the UD modulated signal is an error as main data block, but when the error quantity is small, it is processed as part of ordinary error, and it is corrected by error correction process. On the other hand, the special modulated UD is demodulated by the special demodulator installed only in the drive, and the demodulated UD is subjected to error correction process by a UD exclusive error correction code.

By such process, UD data is recorded or reproduced and utilized only in the drive, and it cannot be operated outside, and hence it can be used as secret information, and when applied in updated data of the encryption key, it is effective to prohibit the illegal copy of restoring the encrypted encryption key saved beforehand as the deleted encrypted encryption key.

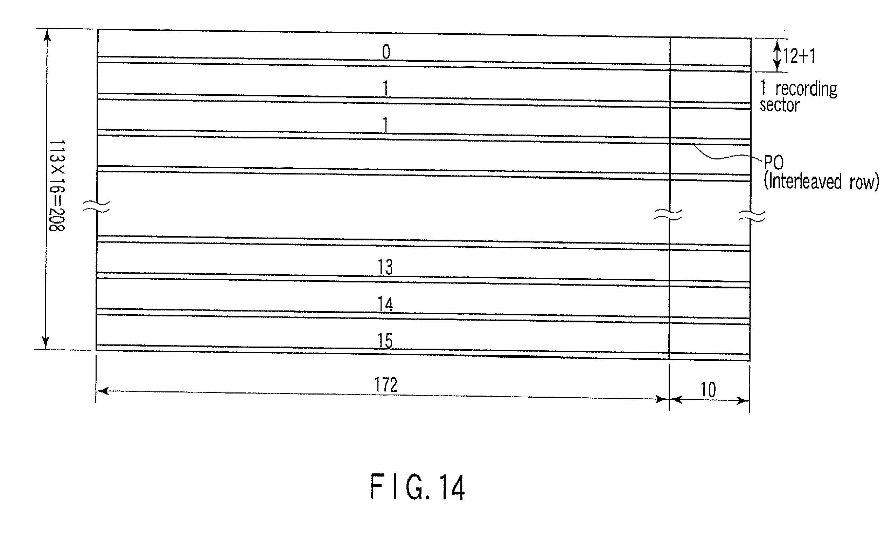

FIG. 14 is an ECC block diagram composed of 16 sets of recording sectors of DVD system.

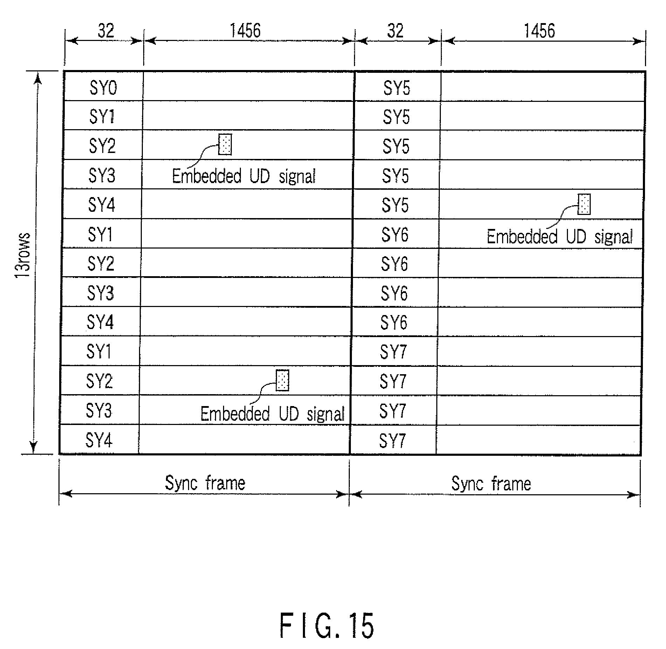

FIG. 15 is a diagram showing the relation of one physical sector in which secret information (UD) is embedded. The secret information (UD) is dispersed and disposed in plural physical sectors, and restoration of main information is enhanced without substantially worsening the error correction capacity of the main information.

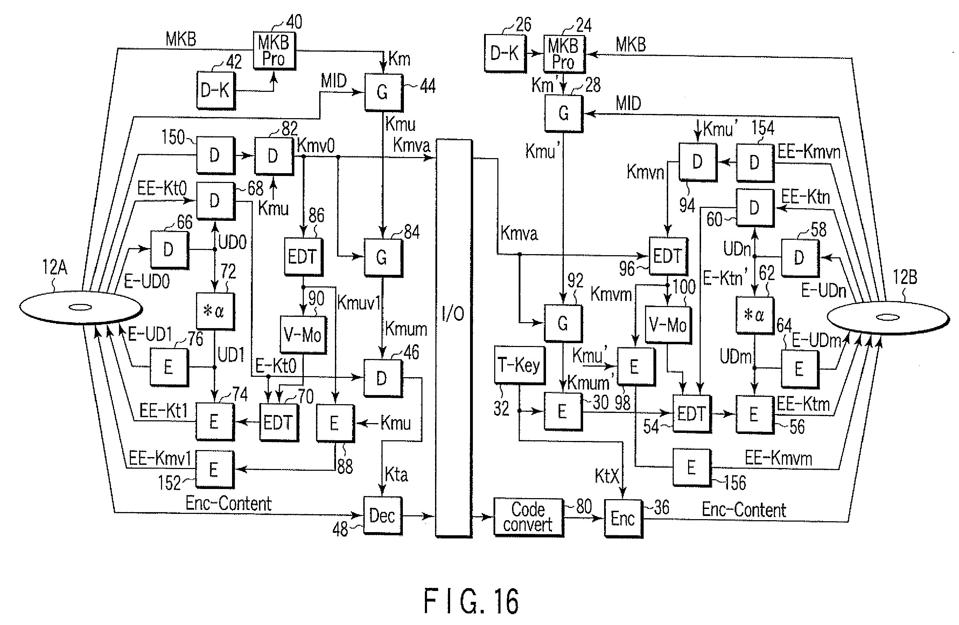

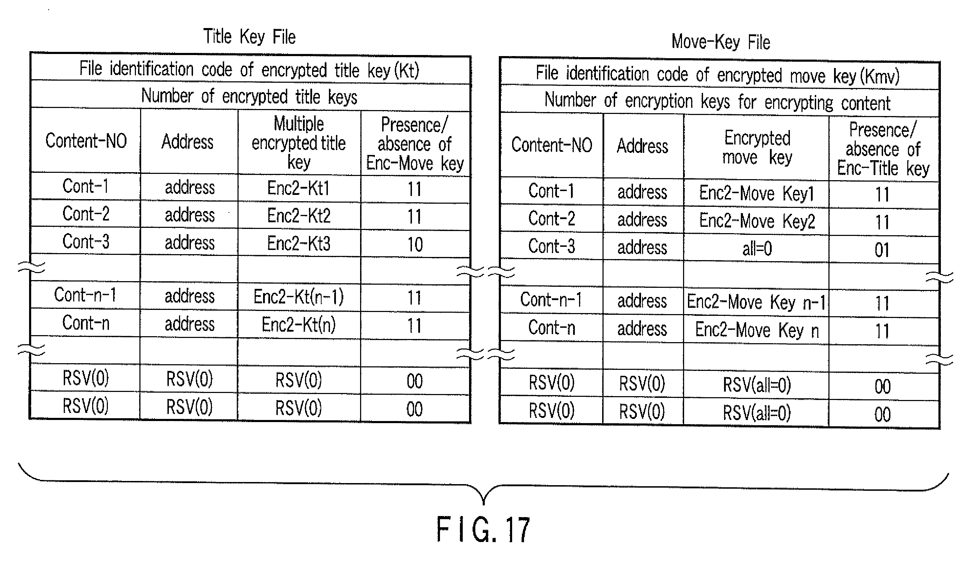

FIGS. 16 and 17 show a second embodiment of the invention.

In the first embodiment of FIGS. 6 and 7, by using the update information (UD) in connection with the move-key and the title key, illegal copy of restoring the title key file from saved backup data is prevented. Illegal restoration of the move-key file by the saved backup data is prevented by assembling the verify data of the move-key into the title key file. In the second embodiment of FIGS. 16 and 17, the move-key verify data is not used, and the move-key file and the title key file are multiple encrypted by update information (UD), and the encryption key file is always updated by update information (UD) when recording or moving, so that illegal restoration by the saved backup data is prohibited. Other process is the same as the process in FIGS. 6 and 7.

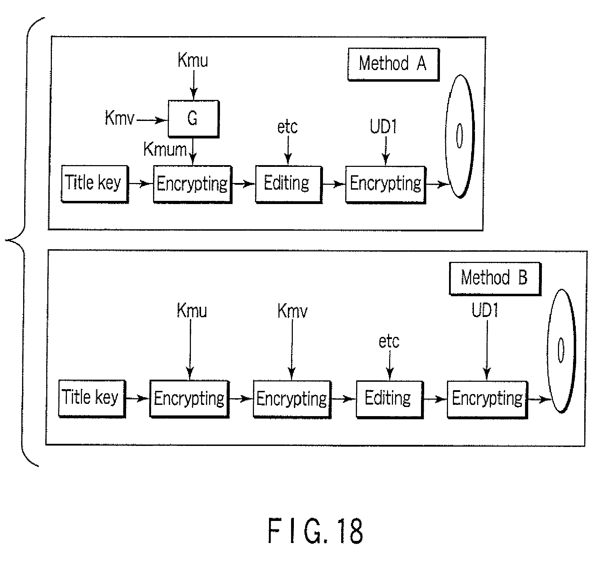

FIG. 18 is a modified example of encrypting process of the title key.

In FIGS. 6 to 16, the title key (Kt) is composed by synthesizing the medium specific key (Kmu) and the move-key (Kmv) by the function generator (G), and the medium specific move-key (Kmum) is generated, and by using it, the title key (Kt) is encrypted. This is method A in FIG. 18.

In other process, after encrypting the title key (Kt) by the medium specific key (Kmu), it is further multiple encrypted by the move-key (Kmv), and further triple encrypted by the secret information (UD), which is method B. In this method, the medium specific move-key (Kmum) is not generated. That is, the title key (Kt) is encrypted three times.

While the description above refers to particular embodiments of the present invention, it will be understood that many modifications may be made without departing from the spirit thereof. The accompanying claims are intended to cover such modifications as would fall within the true scope and spirit of the present invention. The recording medium 12 of the embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein.

According to an embodiment of the present invention, a recording and reproducing apparatus for moving content data from a first recording medium to a second recording medium, in which the first recording medium records an encrypted content (Enc-content) which is obtained by encrypting a plain content with a first key (Kt), a first encrypted key (E-Kt) which is obtained by encrypting a first key with a fourth key (Kmum) which is generated from a second key (Kmv) and a third key (Kmu), and a second encrypted key (E-Kmv) which is obtained by encrypting the second key (Kmv) with the third key (Kmu), the apparatus comprises:
a decrypting unit which decrypts the encrypted content (Enc-content) and the second encrypted key (E-Kmv) which are read from the first recording medium to obtain the plain content and the second key;
a transmitting unit which transmits the plain content and the second key to the second recording medium; and
a deleting unit which deletes the second encrypted key (E-Kmv) from the first recording medium,
whereby keeping the encrypted content (Enc-content) and the first encrypted key (E-Kt) being recorded in the first recording medium but disabling the encrypted content (Enc-content) being decrypted.

According to another embodiment of the present invention, a recording and reproducing apparatus for moving content data from a first recording medium to a second recording medium, in which the first recording medium records an encrypted content (Enc-content) which is obtained by encrypting a plain content with a first key (Kt), a first encrypted key (EE-Kt) which is obtained by encrypting a first key with a fourth key (Kmum) and a fifth key (UDm), the fourth key (Kmum) generated from a second key (Kmv) and a third key (Kmu), a second encrypted key (E-Kmv) which is obtained by encrypting the second key (Kmv) with the third key (Kmu), and a fifth encrypted key (E-UDm) which is obtained by encrypting the fifth key (UDm) with a predetermined key, the apparatus comprises:
a reading unit which reads the first encrypted key (EE-Kt), the second encrypted key (E-Kmv), and the fifth encrypted key (E-UDm) from the first recording medium;
a decrypting unit decrypts the second encrypted key (E-Kmv) with the third key (Kmu) to obtain the second key (Kmv);
a decrypting unit which decrypts the fifth encrypted key (E-UDm) with the predetermined key to obtain the fifth key (UDm);
a decrypting unit which decrypts the first encrypted key (EE-Kt) with the fourth key (Kmum) and the fifth key (UDm), the fourth key (Kmum) generated from the second key (Kmv) and the third key (Kmu) to obtain the first key (Kt);
a decrypting unit which decrypts the encrypted content (Enc-content) with the first key (Kt) to obtain the plain content;
a transmitting unit which transmits the plain content and the second key to the second recording medium; a deleting unit which deletes the second encrypted key (E-Kmv) from the first recording medium;
an updating unit which updates the fifth key (UDm);
an encrypting unit which encrypts the first key (E-Kt) which is encrypted with the fourth key (Kmum) with the updated fifth key (UDm) to update the first key (E-Kt);
an encrypting unit which encrypts the updated fifth key (Um) with the predetermined key to change the updated fifth key,
whereby keeping the encrypted content (Enc-content) and the first encrypted key (E-Kt) being recorded in the first recording medium but disabling the encrypted content (Enc-content) being decrypted.

The apparatus further comprises:
an omitting unit which omits to record the plain content transmitted to the second recording medium, encrypts with the third key the second key transmitted to the second recording medium, and records the encrypted second key in the second recording medium in a case where the content data transmitted to the second recording medium has been recorded in the second recording medium.

In the apparatus, said third key (Kmu) comprises a medium specific key.

In the apparatus, said fifth key (UDm) is based on a secret information recording and reproducing system in which recording, reproducing, and key update are allowed to be performed only in a drive of the recording medium.

In the apparatus, the content data comprises plural contents, plural first keys (Kt) and second keys (Kmv) are provided for the plural contents, verification data (V-Mo) is calculated from the plural second keys (Kmv), the verification data (V-Mo) is insert into a file of encrypted first keys (Kt), the file of the encrypted first keys (Kt) after insertion is encrypted with the third key (UDm) to obtain an encrypted data file including double-encrypted first keys (EE-Kt) and encrypted verification data (Enc-V-Mo) is recorded in the first recording medium.

In the apparatus, the file of the encrypted first keys includes additional information of each of the first keys including an identification of each of the first keys and a flag indicating whether the encrypted second key is stored in or deleted from the first recording medium; and the file of the encrypted second keys includes additional information of each of the second keys and deleted second keys including an identification of each of the contents and a flag indicating whether or not the encrypted first key is stored in the first recording medium.

In the apparatus, the content data comprises plural contents, plural first keys (Kt) and second keys (Kmv) are provided for the plural contents; the plural first keys (Kt) are encrypted with the fourth keys (Kmum) to obtain a file of the encrypted first keys; the plural second keys (Kmv) are encrypted with the third keys (Kmu) to obtain a file of the encrypted second keys; the file of the encrypted first keys and the file of the encrypted second keys are encrypted with the updated third keys (UD) to obtain double-encrypted first keys and double-encrypted second keys; and the double-encrypted first keys and double-encrypted second keys are recorded in the first recording medium.

In the apparatus, the file of the encrypted first keys includes additional information of each of the first keys including an identification of each of the first keys and a flag indicating whether the encrypted second key is stored in or deleted from the first recording medium; and the file of the encrypted second keys includes additional information of each of the second keys and deleted second keys including an identification of each of the contents and a flag indicating whether or not the encrypted first key is stored in the first recording medium.

## Claims

1. A content management method for moving content data from a first recording medium to a second recording medium,
in which the first recording medium records
an encrypted content (Enc-content) which is obtained by encrypting a plain content with a first key (Kt),
a first encrypted key (E-Kt) which is obtained by encrypting a first key with a fourth key (Kmum) which is generated from a second key (Kmv) and a third key (Kmu), and
a second encrypted key (E-Kmv) which is obtained by encrypting the second key (Kmv) with the third key (Kmu), the method **characterized by** comprising:
decrypting the encrypted content (Enc-content) and the second encrypted key (E-Kmv) which are read from the first recording medium to obtain the plain content and the second key;
transmitting the plain content and the second key to the second recording medium; and
deleting the second encrypted key (E-Kmv) from the first recording medium,
whereby keeping the encrypted content (Enc-content) and the first encrypted key (E-Kt) being recorded in the first recording medium but disabling the encrypted content (Enc-content) being decrypted.

2. A content management method for moving content data from a first recording medium to a second recording medium,
in which the first recording medium records
an encrypted content (Enc-content) which is obtained by encrypting a plain content with a first key (Kt),
a first encrypted key (EE-Kt) which is obtained by encrypting a first key with a fourth key (Kmum) and a fifth key (UDm), the fourth key (Kmum) generated from a second key (Kmv) and a third key (Kmu),
a second encrypted key (E-Kmv) which is obtained by encrypting the second key (Kmv) with the third key (Kmu), and
a fifth encrypted key (E-UDm) which is obtained by encrypting the fifth key (UDm) with a predetermined key,
the method **characterized by** comprising:
reading the first encrypted key (EE-Kt), the second encrypted key (E-Kmv), and the fifth encrypted key (E-UDm) from the first recording medium;
decrypting the second encrypted key (E-Kmv) with the third key (Kmu) to obtain the second key (Kmv);
decrypting the fifth encrypted key (E-UDm) with the predetermined key to obtain the fifth key (UDm);
decrypting the first encrypted key (EE-Kt) with the fourth key (Kmum) and the fifth key (UDm), the fourth key (Kmum) generated from the second key (Kmv) and the third key (Kmu) to obtain the first key (Kt);
decrypting the encrypted content (Enc-content) with the first key (Kt) to obtain the plain content;
transmitting the plain content and the second key to the second recording medium;
deleting the second encrypted key (E-Kmv) from the first recording medium;
updating the fifth key (UDm);
encrypting the first key (E-Kt) which is encrypted with the fourth key (Kmum) with the updated fifth key (UDm) to update the first key (E-Kt);
encrypting the updated fifth key (Um) with the predetermined key to change the updated fifth key,
whereby keeping the encrypted content (Enc-content) and the first encrypted key (E-Kt) being recorded in the first recording medium but disabling the encrypted content (Enc-content) being decrypted.

3. A method according to claim 2, **characterized by** further comprising:
omitting to record the plain content transmitted to the second recording medium;
encrypting with the third key the second key transmitted to the second recording medium; and
recording the encrypted second key in the second recording medium in a case where the content data transmitted to the second recording medium has been recorded in the second recording medium.

4. A method according to claim 2, **characterized in that** said third key (Kmu) comprises a medium specific key.

5. A method according to claim 2, **characterized in that** said fifth key (UDm) is based on a secret information recording and reproducing system in which recording, reproducing, and key update are allowed to be performed only in a drive of the recording medium.

6. A method according to claim 2, **characterized in that**
the content data comprises plural contents,
plural first keys (Kt) and second keys (Kmv) are provided for the plural contents,
verification data (V-Mo) is calculated from the plural second keys (Kmv),
the verification data (V-Mo) is inserted into a file of encrypted first keys (Kt),
the file of the encrypted first keys (Kt) after insertion is encrypted with the third key (UDm) to obtain an encrypted data file including double-encrypted first keys (EE-Kt) and encrypted verification data (Enc-V-Mo) is recorded in the first recording medium.

7. A method according to claim 6, **characterized in that**
the file of the encrypted first keys includes additional information of each of the first keys including an identification of each of the first keys and a flag indicating whether the encrypted second key is stored in or deleted from the first recording medium; and
the file of the encrypted second keys includes additional information of each of the second keys and deleted second keys including an identification of each of the contents and a flag indicating whether or not the encrypted first key is stored in the first recording medium.

8. A method according to claim 2, **characterized in that**
the content data comprises plural contents,
plural first keys (Kt) and second keys (Kmv) are provided for the plural contents,
the plural first keys (Kt) are encrypted with the fourth keys (Kmum) to obtain a file of the encrypted first keys;
the plural second keys (Kmv) are encrypted with the third keys (Kmu) to obtain a file of the encrypted second keys;
the file of the encrypted first keys and the file of the encrypted second keys are encrypted with the updated third keys (UD) to obtain double-encrypted first keys and double-encrypted second keys; and
the double-encrypted first keys and double-encrypted second keys are recorded in the first recording medium.

9. A method according to claim 8, **characterized in that**
the file of the encrypted first keys includes additional information of each of the first keys including an identification of each of the first keys and a flag indicating whether the encrypted second key is stored in or deleted from the first recording medium; and
the file of the encrypted second keys includes additional information of each of the second keys and deleted second keys including an identification of each of the contents and a flag indicating whether or not the encrypted first key is stored in the first recording medium.

10. A recording medium **characterized by** recording an encrypted content (Enc-content) which is obtained by encrypting a plain content with a first key (Kt), a first encrypted key (E-Kt) which is obtained by encrypting a first key with a fourth key (Kmum) which is generated from a second key (Kmv) and a third key (Kmu), and a second encrypted key (E-Kmv) which is obtained by encrypting the second key (Kmv) with the third key (Kmu).

11. A recording medium **characterized by** recording an encrypted content (Enc-content) which is obtained by encrypting a plain content with a first key (Kt), a first encrypted key (EE-Kt) which is obtained by encrypting a first key with a fourth key (Kmum) and a fifth key (UDm), the fourth key (Kmum) generated from a second key (Kmv) and a third key (Kmu), a second encrypted key (E-Kmv) which is obtained by encrypting the second key (Kmv) with the third key (Kmu), and a fifth encrypted key (E-UDm) which is obtained by encrypting the fifth key (UDm) with a predetermined key.
